# FASCICULE DE BREVET EUROPEEN

(11) **EP 0 851 112 B1**
(45) Date de publication et mention de la délivrance du brevet: **23.07.2003**
(21) Numéro de dépôt: 97403073.6
(22) Date de dépôt: 18.12.1997
(51) Int. Cl.: F02K 1/70, F16C 11/06

(54) **Dispositif de pivot entre un élément mobile et une structure fixe accessible d'un seul côté**
Scharnieranordnung, die ein bewegliches Bauteil mit einer, nur einseitig zugänglichen, festen Trägerstruktur verbindet
Hinge arrangement linking a movable element to a fixed structure accessible only from one side

(30) Priorité: 26.12.1996 FR 9616031
(43) Date de publication de la demande: 01.07.1998
(73) Titulaire: Hurel Hispano Le Havre, 76700 Harfleur (FR)
(72) Inventeur: Vauchel, Guy Bernard, 76610 Le Havre (FR)
(74) Mandataire: Berrou, Paul

(56) Documents cités:
- EP-A- 0 315 522
- US-A- 5 101 928

## Description

La présente invention concerne un dispositif de pivot assurant la liaison entre un élément mobile déplaçable par rotation autour de ses pivots et une structure fixe.

L'invention est applicable à un dispositif d'inversion de poussée de turboréacteur. On rappelle que dans le cas d'un turboréacteur à double flux, le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La présente invention est applicable au montage d'un élément mobile d'un inverseur de poussée d'un type connu en soi, l'élément mobile en fonction des applications et du type d'inverseur retenu étant soit une porte, soit une grille, soit un panneau aval, un volet ou une coquille.

EP-A-315 522 montre l'exemple d'un inverseur de poussée dans lequel chaque bord latéral d'une porte est relié à la structure fixe d'inverseur par des pivots primaires, constitués d'un axe solidaire du bord latéral et s'articulant au moyen d'une rotule sur une extrémité d'une biellette-support dont l'autre extrémité est reliée de manière articulée à la structure fixe de l'inverseur et un vérin secondaire est articulé sur ladite biellette-support.

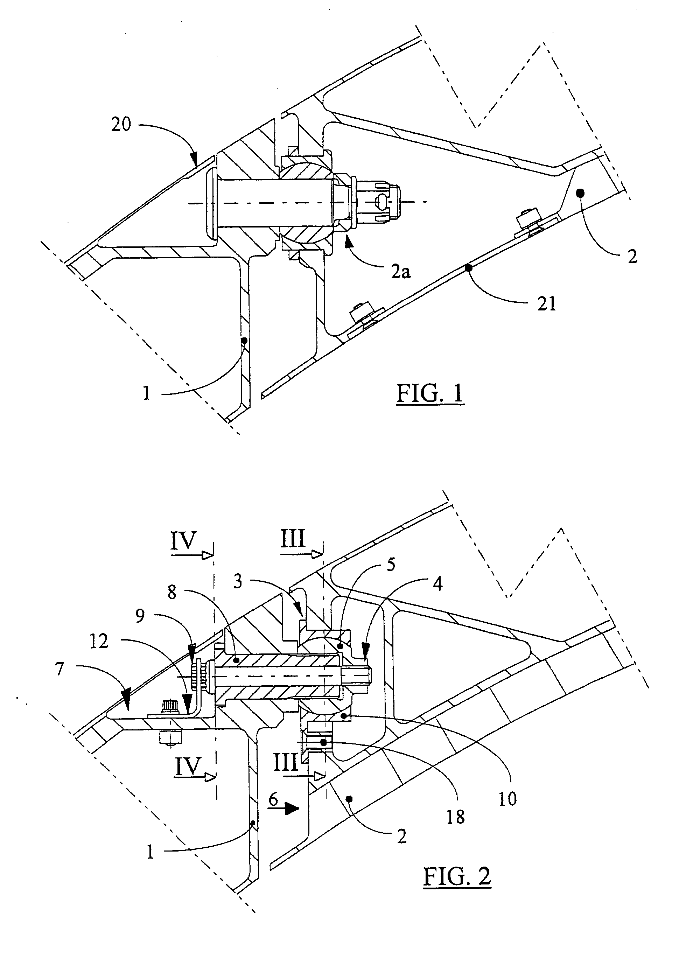

La figure 1 des dessins joints montre un exemple connu d'une réalisation. La partie mobile d'un inverseur de poussée de turboréacteur est constituée de portes 2 reliées à une structure fixe amont 1 d'inverseur et supportées de manière articulée au moyen de pivots 2a constitués de manière connue en soi d'un axe, d'une rotule et d'un écrou. Afin de permettre l'installation de l'axe pivot 2a, des trappes d'accès sont aménagées, une trappe 20 du côté externe sur la structure fixe amont recevant l'axe et une trappe 21 du côté interne sur la porte 2 permettant l'accès à l'écrou. Cette solution connue présente cependant de nombreux inconvénients. Il en résulte en effet un nombre de pièces important et un surcoût de fabrication. Plusieurs interfaces entre éléments doivent être ajustés et imposent des précautions particulières. Les zones occupées par les trappes d'accès 20 et 21 doivent être neutralisées et sont rendues indisponibles pour d'autres fonctions telles qu'un renforcement structural ou une isolation acoustique.

Un des buts de l'invention est de réduire le nombre de trappes d'accès et de manière générale d'éviter les inconvénients des solutions connues antérieures en permettant l'installation d'un ensemble pivot au moyen d'un accès uniquement par un seul côté.

Ces buts sont atteints conformément à l'invention par un assemblage comprenant un pivot assurant la liaison entre un élément mobile déplaçable par rotation autour de ses pivots et une structure fixe, comportant un axe monté sur un élément de structure fixe et assemblé avec une bague interne rotulante disposée sur l'élément mobile, un arrêt en rotation et un arrêt axial étant ménagés sur la tête dudit axe, un accès unique étant ménagé du côté de la tête de l'axe et aucun accès n'étant possible à l'autre extrémité de l'axe.

D'autres caractéristiques et avantages de l'invention seront mieux compris à la lecture de la description qui va suivre des modes de réalisation de l'invention appliquée à une porte d'inverseur de poussée de turboréacteur, en référence aux dessins annexés sur lesquels :
- la figure 1 représente un exemple d'utilisation courante et qui a fait précédemment l'objet d'une description, suivant une vue en coupe par un plan passant par l'axe du pivot ;
- la figure 2 représente un exemple de montage de l'invention, suivant une vue en coupe par un plan passant par l'axe du pivot;
- la figure 3 représente un exemple de liaison entre l'axe et la rotule du dispositif de pivot représenté sur la figure 2 suivant une vue en coupe par un plan passant par la ligne III-III de la figure 2 ;
- la figure 4 représente un exemple d'arrêt en rotation de la tête de l'axe du dispositif de pivot représenté sur la figure 2 suivant une vue en coupe par un plan passant par la ligne IV-IV de la figure 2 ;
- la figure 5 représente un autre mode de réalisation de l'invention suivant une vue analogue à celle de la figure 2 ;
- la figure 6 représente un exemple d'encastrement de la rotule dans la structure fixe du dispositif de pivot représenté sur la figure 5 suivant une vue en coupe par un plan passant par la ligne VI-VI de la figure 5 ;
- la figure 7 représente un autre mode de réalisation de l'invention, selon une vue analogue à celles des figures 2 et 5;
- la figure 8 représente un autre mode de réalisation de l'invention, selon une vue analogue à celles des figures 2, 5 et 7 ;
- la figure 9 représente un détail de réalisation du dispositif de pivot représenté sur la figure 8, suivant une vue en coupe par un plan passant par la ligne IX-IX de la figure 8 ;
- la figure 10 représente un autre mode de réalisation de l'invention selon une vue analogue à celles des figures 2, 5, 7 et 8 ;
- la figure 11 représente un détail de réalisation du dispositif de pivot représenté sur la figure 10, suivant une vue selon la flèche XI de la figure 10 ;
- la figure 12 représente un détail de réalisation du dispositif de pivot représenté sur la figure 10, suivant une vue en coupe par un plan passant par la ligne XII-XII de la figure 10.

Selon un mode de réalisation de l'invention représenté sur la figure 2, un élément de pivotement formant logement 3 dont l'écrou 4 est intégré à la bague interne 5, qui peut être rotulante comme montré sur la figure, est installé sur l'élément mobile 2 par l'externe 6. La structure fixe 1 comporte un accès 7 d'installation et de mise en place d'un axe 8 et d'une vis de blocage 9.

L'élément de pivotement 3 est fixé sur la structure mobile soit par un ensemble de vis 18 soit lui même fileté et vissé dans la structure mobile ou tout autre montage connu de l'homme du métier.

L'élément de pivotement 3 peut comporter une excentration entre la cage 10 et la structure mobile 2, ceci permet par une rotation de la cage 10 un réglage dans les lignes de l'ensemble structure mobile 2 et structure fixe 1.

L'axe 8 est monté dans un alésage pratiqué dans la structure fixe 1. Celui-ci est de dimension telle qu'il permette les reprises d'effort qui transitent par lui de la structure mobile 2 à la structure fixe 1. L'extrémité reçoit un usinage de forme adaptée 16 qui se marie avec l'alésage de la bague interne 5, la tête de l'axe 8 étant elle-même retenue en rotation par rapport à la structure fixe 1. De ce fait, la bague interne ou rotule 5 est solidaire de la structure fixe 1 et est arrêtée en rotation permettant le montage et le serrage par la vis 9. La rotation de la structure mobile 2 sur la structure fixe 1 se faisant entre la cage 10 et la bague interne 5 de l'élément de pivotement 3.

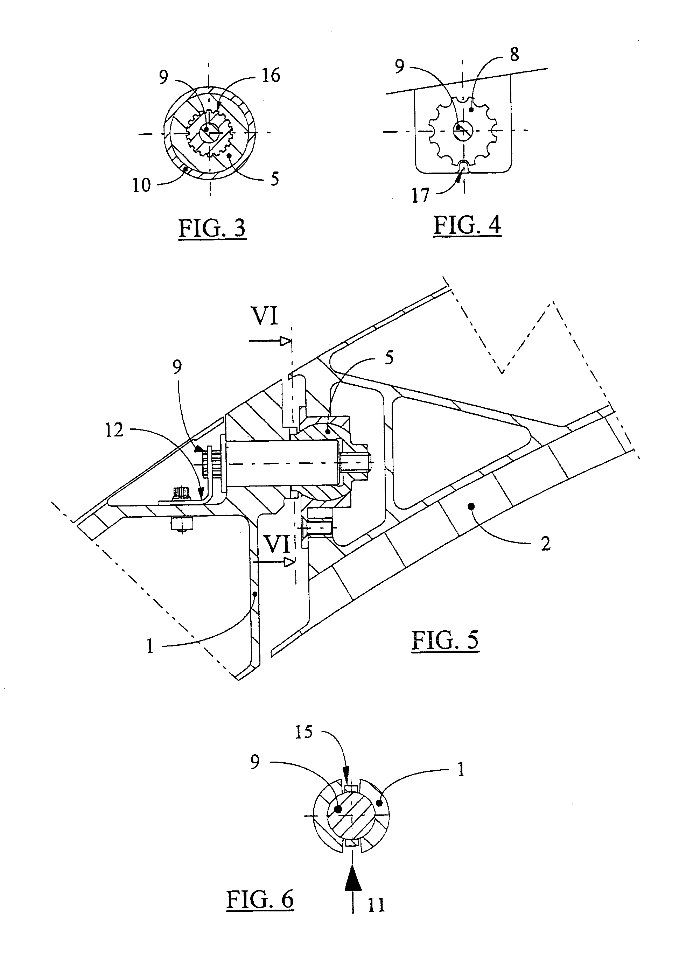

Suivant la figure 3, l'assemblage entre l'axe 8 et la bague interne 5 peut se faire par cannelures 16, il peut être de toute autre forme géométrique connue ou même être réalisé par clavetage.

De même l'arrêt en rotation de la tête de l'axe 8 comme suivant la figure 4 peut se faire selon différentes réalisations, fixe 17 ou rapportées, permettant un arrêt dans plusieurs positions de l'axe ou bien dans une seule selon le nombre de dentelure retenu.

Une vis 9 traverse l'axe 8 et permet la suppression de tout jeu entre la bague interne 5 sur la structure 1. Celle-ci peut être arrêtée en rotation par un ensemble 12 démontable et rapportable coiffant la tête et fixé sur la structure fixe 1. Bien sûr la bague interne 5 peut au niveau de son taraudage comporter une déformation géométrique le rendant auto bloquant.

Selon un mode de réalisation de l'invention représenté sur la figure 5 la vis 9 peut être de dimension suffisante pour reprendre les efforts qui transitent de la structure mobile 2 vers la structure fixe 1, dans ce cas l'axe 8 peut être supprimé. L'arrêt en rotation de la bague interne 5 peut se faire par un encastrement d'une partie 15 de la bague ayant une forme adaptée dans un logement pratiqué dans la structure 5 fixe 1, la figure 6 donne un exemple non limitatif dans sa réalisation. La flèche 11 montre le sens de montage de la structure mobile 2 sur la structure fixe 1 par rapport à l'encastrement retenu.

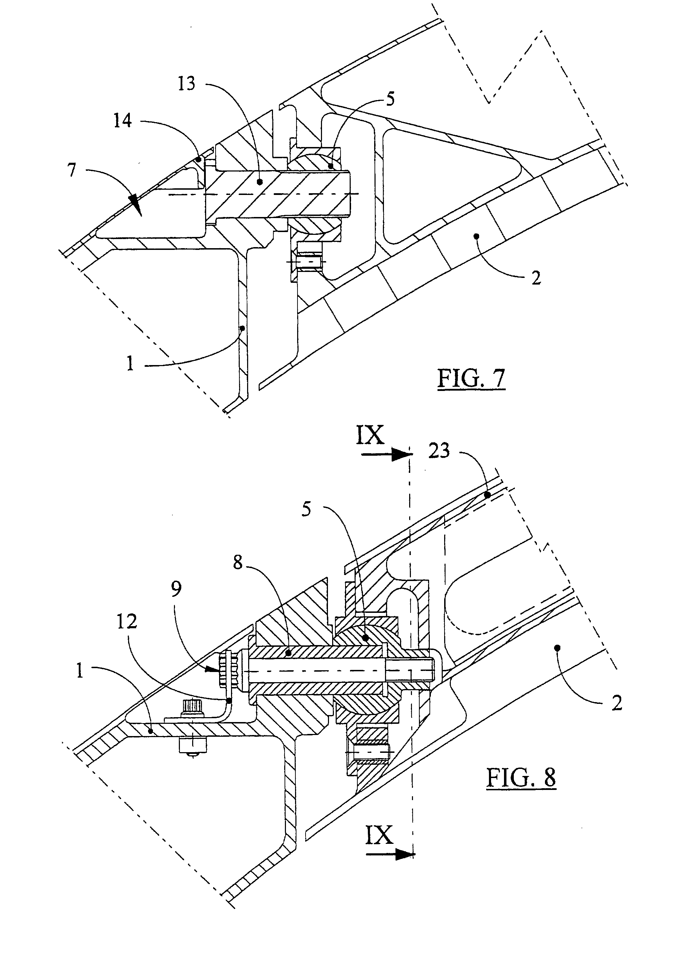

Selon un mode de réalisation de l'invention représenté sur la figure 7, pour le cas où un montage sans jeu entre la bague interne 5 et la structure fixe 1 n'est pas nécessaire, un axe 13 identique dans sa conception à l'axe 8 mais ne comportant pas de trou central (avec ou sans cannelures) peut être utilisé. Le maintien en place de l'axe peut être réalisé soit par une pièce rapportée fixée dans la partie interne de l'accès 7 ou autre exemple comme montré dans la figure où la trappe d'accès 14 sert elle-même d'arrêt.

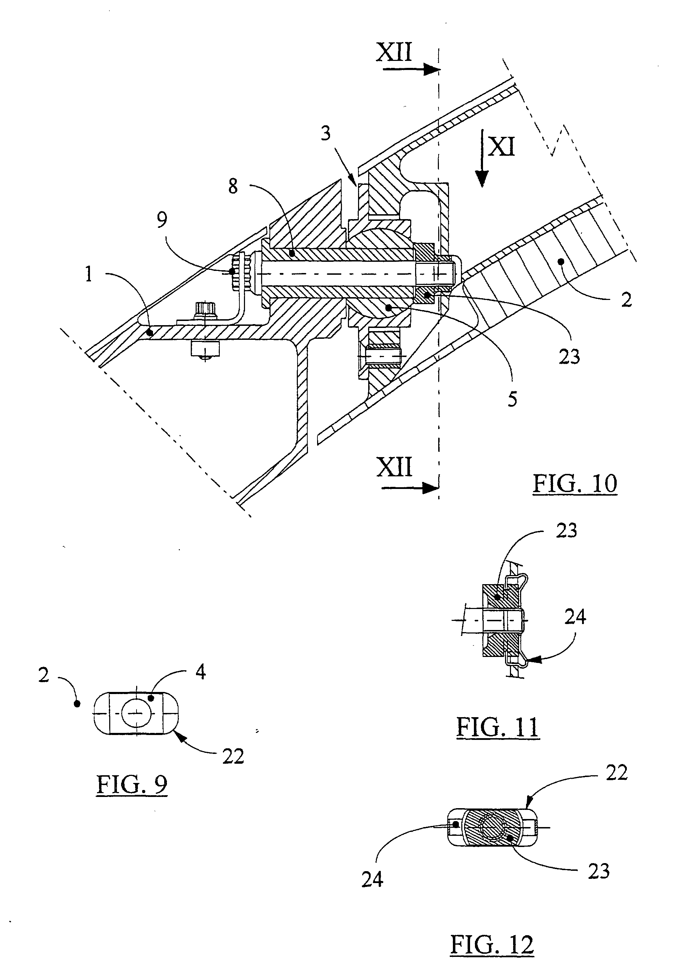

Selon les figures 8 et 9, l'écrou 4 intégré à la rotule 5, vient se positionner dans une empreinte 22 de forme adaptée pour recevoir la définition géométrique retenue dudit écrou. Cette empreinte peut être remplacée, par exemple, par une butée locale assujettie à la structure de la ferrure pivot 21 de la porte 2. La partie recevant l'empreinte ou la butée peut être réalisée dans un voile intégré à la ferrure comme représenté sur la figure ou être rapportée sur l'une des pièces de la structure de la porte 2.

Un jeu minimum peut être prévu entre l'écrou 4 et l'empreinte 22 pour permettre un léger mouvement différentiel entre ces deux pièces.

La fixation de la porte 2 sur la structure fixe 1 peut se faire indifféremment par un axe 8 et sa vis 9 ou par une vis 9 unique comme représentée sur la figure 5.

Les figures 10 à 12 représentent un mode de réalisation de l'invention utilisant un type de rotule connu. Dans ce concept, l'écrou 23 est indépendant de l'élément de pivotement 3. Une empreinte 22, d'un type identique à celle déjà définie, reçoit une partie de l'écrou 23, ceci pour arrêter en rotation l'écrou. Un système de maintien permanent de l'écrou 23 dans l'empreinte 22 est ajouté au système. Ce peut être tout type de retenue connu de l'homme de l'art pour ce genre de technologie, comme proposé en exemple sur la figure, un ressort 24 de forme spécifique permet le maintien de l'écrou 23 dans son logement 22 tout en permettant une liberté de mouvement dudit écrou.

Naturellement le montage de la porte 2 sur la structure fixe 1 peut se faire indifféremment par un axe 8 et sa vis 9 ou par une vis 9 unique comme représenté sur la figure 5.

Selon le besoin, tout montage conforme à l'invention peut être réalisé par l'intérieur de la porte 2. La tête de l'axe 8, 9 ou 12 vient bloquer la rotule 5 sur la structure fixe 1 et la trappe 14 ou 20 se trouve alors placée sur la porte 2.

## Revendications

1. Assemblage comprenant un pivot assurant la liaison entre un élément mobile (2) déplaçable par rotation autour de ses pivots (3) et une structure fixe (1), comportant un axe (8; 13) monté sur un élément de la structure fixe (1) et assemblé avec une bague interne rotulante (5) disposée sur l'élément mobile (2), un arrêt en rotation et un arrêt axial étant ménagés sur la tête dudit axe (8; 13), un accès unique étant ménagé du côté de la tête de l'axe (8; 13) et aucun accès n'étant possible à l'autre extrémité de l'axe (8 ; 13)

2. Assemblage à pivot selon la revendication 1 dans lequel ladite bague interne (5) comporte une partie intégrée formant écrou (4) et est associée à un élément de pivotement formant logement (3) qui est fixé sur l'élément mobile (2), ledit axe (8) comportant un alésage traversé par une vis (9) bloquée par un arrêt et dont l'extrémité est vissée sur ledit écrou (4) et la tête bloque axialement ledit axe (8), l'assemblage entre axe (8) et bague interne (5) étant réalisé par cannelures (16).

3. Assemblage à pivot selon la revendication 1 dans lequel ladite bague interne (5) comporte une partie intégrée formant 1 écrou (4) et est associée à un élément du pivotement formant logement (3) qui est fixé sur l'élément mobile (2), ledit axe formant une vis (9) dont l'extrémité est vissée sur ledit écrou (4).

4. Assemblage à pivot selon la revendication 1 dans lequel ladite bague interne (5) est associée à un élément de pivotement formant logement (3) qui est fixé sur l'élément mobile (2), l'assemblage entre axe (13) et bague interne (5) étant réalisé par cannelures et l'arrêt axial de l'axe (13) étant assuré par un élément solidaire de la trappe d'accès (14) ménagée sur la structure fixe (1).

5. Assemblage à pivot selon la revendication 1 dans lequel ladite bague interne (5) comporte une partie intégrée formant écrou (4) et est associée à un élément de pivotement formant logement (3) qui est fixé sur l'élément mobile (2), ledit axe (8) comportant un alésage traversé par une vis (9) bloquée par un arrêt et dont l'extrémité est vissée sur ledit écrou (4), l'écrou (4) étant immobilisé en rotation par l'élément mobile (2).

6. Assemblage à pivot selon la revendication 1 comportant un axe (8) dont l'alésage est traversé par une vis (9) bloquée par un arrêt et dont l'extrémité est vissée dans un écrou (23) bloqué en rotation et maintenu en place dans un logement'(22) ménagé sur ledit élément mobile, ledit axe (8) coopérant avec une rotule (3) disposée sur l'élément mobile (2).

7. Assemblage à pivot selon l'une quelconque des revendications 1 à 6 **caractérisé en ce que** ladite structure fixe constitue la partie amont (1) de structure fixe d'un inverseur de poussée de turboréacteur et ledit élément mobile (2) constitue une partie mobile de l'inverseur formant un obstacle au flux dans la position d'inversion.

## Patentansprüche

1. Baugruppe, die ein Drehgelenk umfaßt, das die Verbindung zwischen einem um seine Drehzapfen (3) drehbaren beweglichen Element (2) und einer festen Struktur (1) ermöglicht, mit einer Achse (8; 13), die an einem Element der festen Struktur (1) montiert und mit einem an dem beweglichen Element (2) angeordneten Innenring (5) eines Kugelgelenks verbunden ist, wobei an dem Kopf der Achse (8; 13) eine Dreharretierung und eine axiale Arretierung vorgesehen sind und wobei ein einziger Zugang auf der Seite des Kopfes der Achse (8; 13) vorgesehen und kein Zugang zu dem anderen Ende der Achse (8; 13) möglich ist.

2. Drehgelenkbaugruppe nach Anspruch 1, bei der der Innenring (5) einen integrierten Teil aufweist, der eine Schraubenmutter (4) bildet und einem Drehgelenkelement zugeordnet ist, das einen Sitz (3) bildet, der an dem beweglichen Element (2) fixiert ist, wobei die Achse (8) eine Bohrung aufweist, die von einer Schraube (9) durchdrungen wird, die von einer Arretierung gesichert wird und deren Ende in die Schraubenmutter (4) geschraubt ist und deren Kopf die Achse (8) in axialer Richtung arretiert, wobei die Verbindung zwischen der Achse (8) und dem Innenring (5) durch Kerbverzahnungen (16) erfolgt.

3. Drehgelenkbaugruppe nach Anspruch 1, bei der der Innenring (5) einen integrierten Teil aufweist, der die Schraubenmutter (4) bildet und einem Drehgelenkelement zugeordnet ist, das einen Sitz (3) bildet, der an dem beweglichen Element (2) fixiert ist, wobei die Achse eine Schraube (9) bildet, deren Ende in die Schraubenmutter (4) geschraubt ist.

4. Drehgelenkbaugruppe nach Anspruch 1, bei der der Innenring (5) einem Drehgelenkelement zugeordnet ist, das einen Sitz (3) bildet, der an dem beweglichen Element (2) fixiert ist, wobei die Verbindung zwischen der Achse (13) und dem Innenring (5) durch Kerbverzahnungen erfolgt und die axiale Arretierung der Achse (13) durch ein Element ermöglicht wird, das mit der an der festen Struktur (1) angebrachten Zugangsklappe (14) fest verbunden ist.

5. Drehgelenkbaugruppe nach Anspruch 1, bei der der Innenring (5) einen integrierten Teil aufweist, der die Schraubenmutter (4) bildet und einem Drehgelenkelement zugeordnet ist, das einen Sitz (3) bildet, der an dem beweglichen Element (2) fixiert ist, wobei die Achse (8) eine Bohrung aufweist, die von einer Schraube (9) durchdrungen wird, die durch eine Arretierung gesichert wird und deren Ende in die Schraubenmutter (4) geschraubt ist, wobei die Schraubenmutter (4) durch das bewegliche Element (2) gegen Drehung gesichert ist.

6. Drehgelenkbaugruppe nach Anspruch 1, mit einer Achse (8), deren Bohrung von einer Schraube (9) durchdrungen wird, die durch eine Arretierung gesichert ist und deren Ende in eine Schraubenmutter (23) geschraubt ist, die gegen Drehung gesichert ist und in einem an dem beweglichen Element angebrachten Sitz (22) an ihrer Stelle gehalten wird, wobei die Achse (8) mit einem an dem beweglichen Element (2) vorgesehenen Kugelgelenk (3) zusammenwirkt.

7. Drehgelenkbaugruppe nach einem der Ansprüche 1 bis 6, **dadurch gekennzeichnet, daß** die feste Struktur den stromaufwärtigen Teil (1) der festen Struktur einer Schubumkehrvorrichtung eines Turbostrahltriebwerks bildet und daß das bewegliche Element (2) einen beweglichen Teil der Schubumkehrvorrichtung bildet und in der Schubumkehrposition ein Hindernis für die Strömung darstellt.

## Claims

1. Assembly comprising a pivot providing the connection between a moving element (2) that can be moved in rotation about its pivots (3), and a fixed structure (1), comprising an axle (8; 13) mounted on an element of the fixed structure (1) and assembled with a swivelling internal ring (5) arranged on the moving element (2), a rotation stop and an axle stop being formed on the head of the said axle (8; 13), the only access being had on the same side as the head of the axle (8; 13), there being no possibility of accessing the other end of the axle (8; 13).

2. Pivot assembly according to Claim 1, in which the said internal ring (5) has an integrated part forming a nut (4) and is associated with a pivoting element forming a housing (3) which is fixed to the moving element (2), the said axle (8) having a bore through which there passes a screw (9) immobilized by a stop and the end of which is screwed into the said nut (4) and the head axially immobilizes the said axle (8), the assembly between the axle (8) and the internal ring (5) employing splines (16).

3. Pivot assembly according to Claim 1, in which the said internal ring (5) comprises an integrated part forming a nut (4) and is associated with a pivoting element forming a housing (3) which is fixed to the moving element (2), the said axle forming a screw (9) the end of which is screwed into the said nut (4).

4. Pivot assembly according to Claim 1, in which the said internal ring (5) is associated with a pivoting element forming a housing (3) which is fixed to the moving element (2), the assembly between the axle (13) and the internal ring (5) employing splines and the axle (13) being afforded an axial stop by an element secured to the access hatch (14) formed in the fixed structure (1).

5. Pivot assembly according to Claim 1, in which the said internal ring (5) comprises an integrated part forming a nut (4) and is associated with a pivoting element forming a housing (3) which is fixed to the moving element (2), the said axle (8) having a bore through which there passes a screw (9) immobilized by a stop and the end of which is screwed into the said nut (4), the nut (4) being prevented from turning by the moving element (2).

6. Pivot assembly according to Claim 1, comprising an axle (8) the bore of which has passing through it a screw (9) immobilized by a stop and the end of which is screwed into a nut (23) prevented from turning and held in place in a housing (22) formed on the said moving element, the said axle (8) collaborating with a ball-type joint (3) arranged on the moving element (2).

7. Pivot assembly according to any one of Claims 1 to 6, **characterized in that** the said fixed structure constitutes the upstream part (1) of the fixed structure of a turbojet thrust reverser and the said moving element (2) constitutes a moving part of the reverser forming an obstacle to the stream in the thrust-reversal position.
